Europäisches Patentamt

**European Patent Office**

**Office européen des brevets**

(11) Veröffentlichungsnummer: **0 047 415**
A1

(12) **EUROPÄISCHE PATENTANMELDUNG**

(21) Anmeldenummer: **81106512.7**

(22) Anmeldetag: **21.08.81**

(51) Int. Cl.³: **A 01 D 53/06**

(30) Priorität: **04.09.80 DE 3033345**

(43) Veröffentlichungstag der Anmeldung: **17.03.82**
**Patentblatt 82/11**

(84) Benannte Vertragsstaaten: **AT BE CH IT LI NL SE**

(71) Anmelder: **Wolf-Geräte GmbH, Gregor-Wolf-Strasse Postfach 860 und 880, D-5240 Betzdorf/Sieg (DE)**

(72) Erfinder: **Kolb, Walter, Martin-Luther-Strasse 59, D-5240 Betzdorf/Sieg (DE)**

(74) Vertreter: **Wallach, Curt, Dipl.-Ing. Patentanwälte Dipl.-Ing. C.Wallach et al, Dipl.-Ing. G. Koch Dr.T.Haibach Dipl.-Ing. R. Feldkamp Kaufingerstrasse 8, D-8000 München 2 (DE)**

(54) Sichelrasenmäher mit Heckauswurf.

㉗ Bei einem Sichelmäher ist der Heckauswurf mit einer selbstschließenden Schutzklappe (1) versehen, die mit ihrem oberen Rand (4) über Scharniere (2) am Mäherchassis (5) angelenkt ist und bei am Chassis eingehängtem Grasfangkorb eine Entleerungsöffnung des Fangkorbes abdeckt.

- 1 -

Sichelrasenmäher mit Heckauswurf

Die Erfindung bezieht sich auf einen Sichelrasenmäher mit Heckauswurf für das Schnittgut und einer selbstschließenden Schutzklappe hierfür. Diese Schutzklappe muß nach den bestehenden Vorrichtungen bei derartigen Rasenmähern vorgesehen sein, um den Auswurfkanal abzudecken und die hinter dem Mäher stehende Bedienungsperson gegen Steinschlag zu schützen.

Wenn an den Heckauswurf eine Grasfangeinrichtung in Gestalt eines Grasfangkorbes eingehängt wird, so muß diese Schutzklappe den Auswurf freigeben.

Der Erfindung liegt die Aufgabe zugrunde, einen Sichelrasenmäher der eingangs genannten Bauart so auszubilden, daß bei Gewährleistung der vorgeschriebenen Sicherheitsfunktionen ein bequemes Arbeiten mit und ohne Grasfangkorb gewährleistet wird, wobei die Schutzklappe mehrere Funktionen erfüllt.

Gelöst wird die gestellte Aufgabe dadurch, daß die Schutzklappe mit ihrem oberen Rand über Scharniere am Mäherchassis angelenkt ist, und daß die Schutzklappe bei am Chassis eingehängtem Grasfangkorb in ausgeschwenkter Stellung eine Entleerungsöffnung des Fangkorbes abdeckt.

Dadurch, daß die selbstschließende Klappe über Scharniere am Mäher hinten angelenkt ist, wird das Ablegen des Schnittgutes auf der Rasenfläche gewährleistet und die Bedienungsperson gegen nach hinten ausgeworfene Gegenstände, beispielsweise Steinschlag, geschützt.

Beim Arbeiten mit Grasfangkorb dient die Heckklappe als obere Fangkorbabdeckung und beim Aushängen des Fangkorbes bleibt die Klappe am Mäher und die Entleerungsöffnung des Korbes liegt sofort frei, so daß sich ein getrenntes Öffnen des Fangkorbes erübrigt und dieser schnell und bequem entleert werden kann.

Durch die Merkmale des Anspruchs 2 wird erreicht, daß auf einen starren Rahmen am Oberteil des Grasfangkorbes verzichtet werden kann, da die Schutzklappe, die die Entleerungsöffnung bedeckt, an dem gegenüberliegenden Ende angreift und eine starre Halterung in Verbindung mit einer Einhängevorrichtung an der hinteren Chassis-Unterkante gewährleistet wird. Die Verbindung von Schutzklappe und Grasfangkorb kann dabei durch eine Verriegelungsvorrichtung bewirkt werden, die einen Fanghaken am Hinterrand der Klappe aufweist, der mit einer Verriegelungsstange des Grasfangkorbes zusammenwirkt, die quer über den Hinterrand der Entleerungsöffnung geführt ist. Beim Einhängen des Fangkorbes braucht die zweckmäßigerweise mit einer Griffschale versehene Heckklappe nur hochgeklappt zu werden, und der Korb kann dann an der hinteren Chassis-Unterkante in dafür vorgesehene Öffnungen eingehängt werden. Dann wird die Klappe geschlossen und rastet am Fangkorb oben in der Verriegelungsvorrichtung ein, und der Rasenmäher ist mit Fangkorb betriebsbereit.

Nach Abnehmen des Grasfangkorbes fällt die Schutzklappe automatisch durch Schwerkraft in die Abdeckstellung zurück, so daßdann der Mäher ohne Grasfangkorb, jedoch gegen Auswurf von Steinen geschützt, benutzt werden kann.

Die Erfindung wurde vorstehend und wird nachstehend in Verbindung mit einem Sichelrasenmäher mit Heckauswurf beschrieben. Das Prinzip der Erfindung ist jedoch auch für andere Rasenmäher mit anderen Mähsystemen und seitlichem oder schrägen Auswurf anwendbar und nicht auf das nachstehend beschriebene Ausführungsbeispiel beschränkt.

Nachstehend wird ein Ausführungsbeispiel der Erfindung anhand der Zeichnung beschrieben. In der Zeichnung zeigen

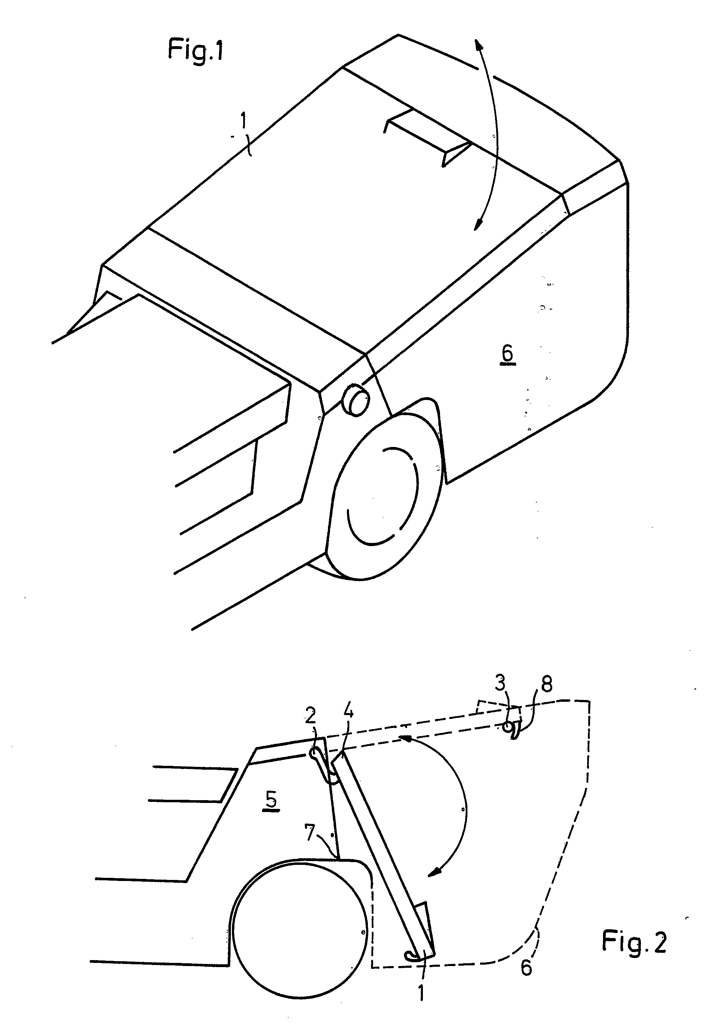

Figur 1 eine perspektivische Teilansicht eines Sichelrasenmähers mit angesetztem Grasfangkorb und

Figur 2 eine schematische Ansicht des Rasenmäher-Hinterteils mit angedeutetem Grasfangkorb.

Der dargestellte Rasenmäher weist einen aus der Zeichnung nicht ersichtlichen Heckauswurf in Gestalt einer Öffnung auf, die sich über den Mittelteil einer ebenen Hinterwand des Chassis 5 erstreckt. Diese Öffnung ist durch eine Schutzklappe 1 abdeckbar, die mit ihrem oberen Rand 4 über Scharniere 2 am Oberrand des Chassis 5 angelenkt ist. Diese Schutzklappe 1 erstreckt sich über die gesamte Breite des Chassis und deckt dadurch die in der Mitte oder seitlich angeordnete Auswurföffnung sicher ab.

- 4 -

Die Klappe 1 fällt durch Schwerkraft in die Abdeckstellung, in der das Schnittgut aus dem Heckauswurf austreten kann und dann von der Schutzklappe auf der Rasenfläche abgelegt wird.

Der Grasfangkorb 6 wird an der hinteren Chassis-Unterkante 7 in dafür vorgesehene Öffnungen eingehängt, wobei die Schutzklappe 1 über das Chassis zurückgeschlagen ist, und dann rastet die Klappe am Fangkorb mit einer Verriegelungsvorrichtung ein, die aus einer an der Hinterkante der Entleerungsöffnung des Fangkorbes 6 angeordneten Verriegelungsstange 3 und einer elastischen Riegelnase 8 besteht, die an dem dem Scharnier 2 gegenüberliegenden Hinterrand der Klappe 1 angeordnet ist. Eine Griffmulde 9 dient zur leichteren Handhabung der Klappe bei der Verriegelung und Entriegelung mit dem Fangkorb.

Patentansprüche

1. Sichelrasenmäher mit Heckauswurf für das Schnittgut und mit einer selbstschließenden Schutzklappe
hierfür, dadurch gekennzeichnet, daß die Schutzklappe
(1) mit ihrem oberen Rand (4) über Scharniere (2) am
Mäherchassis (5) angelenkt ist, und daß die Schutzklappe (1) bei am Chassis eingehängtem Grasfangkorb (6) in ausgeschwenkter Stellung eine Entleerungsöffnung des Fangkorbes (6) abdeckt.

2. Sichelrasenmäher nach Patentanspruch 1, dadurch
gekennzeichnet, daß die Schutzklappe (1) einen Teil
der Fangkorbhalterung bildet.

3. Sichelrasenmäher nach Anspruch 2, dadurch gekennzeichnet, daß der Fangkorb (6) an der hinteren Chassis-
Unterkante (7) in entsprechenden Öffnungen eingehängt ist, und daß die Klappe (1) an ihrer dem
Scharnier (2) entgegengesetzten Kante eine am Hinterrand der Entleerungsöffnung des Fangkorbes (6)
angreifende Vorrichtung (8) aufweist.

4. Sichelrasenmäher nach Anspruch 3, dadurch gekennzeichnet, daß die Verriegelungsvorrichtung aus
einer elastischen vom Rand der Klappe vorstehenden
Riegelnase (8) gebildet wird, die an einer Verriegelungsstange (3) an der Hinterkante der Entleerungsöffnung des Grasfangkorbes (6) angeordnet ist.

5. Sichelrasenmäher nach einem der Ansprüche 1 bis 4,
dadurch gekennzeichnet, daß die Schutzklappe (1) am
Hinterrand eine Griffmulde (9) aufweist.

Fig.1

Fig.2

Europäisches
Patentamt

**EUROPÄISCHER RECHERCHENBERICHT**

00474415
Nummer der Anmeldung

EP 81 10 6512.7

| Kategorie | Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| X | AU – B – 421 582 (SUNBEAM CORP. LTD.)<br>* Seite 5, letzter Absatz bis Seite 6, vorletzter Absatz; Fig. 1 * | 1,5 | A 01 D 53/06 |
| X | AU – B – 449 385 (ROVER MOWERS PTY.)<br>* ganzes Dokument * | 1 | |
| A | US – A – 3 517 493 (P.W. KITELEY) | | |

**EINSCHLÄGIGE DOKUMENTE**

---

**RECHERCHIERTE SACHGEBIETE (Int. Cl.³)**

A 01 D 35/26
A 01 D 35/262
A 01 D 53/00

---

Der vorliegende Recherchenbericht wurde für alle Patentansprüche erstellt.

| Recherchenort | Abschlußdatum der Recherche | Prüfer |
|---|---|---|
| Berlin | 27-10-1981 | SCHOFER |

EPA form 1503.1  06.78